# EUROPEAN PATENT APPLICATION

(11) **EP 2 523 436 A1**
(43) Date of publication of application: **14.11.2012**
(21) Application number: 11290220.0
(22) Date of filing: 11.05.2011
(51) Int. Cl.: H04M 1/725

(54) **Mobile device and method of managing applications for a mobile device**

(71) Applicant: Alcatel Lucent, 75007 Paris (FR)
(72) Inventor: Senot, Christophe, Paris 75014 (FR); Kostadinov, Dimitre, Paris 75015 (FR); Toms, Yann, Paris 75014 (FR); Rebierre, Nicolas, MAssy 91300 (FR)
(74) Representative: Lück, Stephan

(57) **Abstract**

A mobile device comprises: a content selector for selecting recommended mobile applications from those available to the device based on at least one of: context information; user defined preference; and context events. A first user interface area is included for displaying recommended applications selected by the content selector. A second user interface area is included for displaying applications selected by the user for a given context. The first user interface area may be dynamically updated according to user activity and/or on user request. In one embodiment, the content selector selects mobile applications from mobile applications stored on the device and from mobile applications stored remotely.

## Description

### FIELD OF THE INVENTION

The present invention relates to a mobile device and a method of managing applications for a mobile device.

### BACKGROUND

Mobile devices, such as smartphones and tablets, are able to run application software, also termed "apps", to perform tasks. Applications may be pre-installed on a device prior to purchase by a user or added afterwards by the user, for example, by downloading them from a distributor. A user may install applications, for example, to facilitate interaction with websites, to access content, for messaging, for game play, and for performing many other functions. Wireless networks, such as 3G, LTE and WIFI, have high-bandwidth capabilities, and modem mobile devices have large storage capacity, making it easy for users to install large numbers of apps. It is not uncommon for someone to have 200 apps installed on their phone. A user may select an app to launch by selecting it from a list or possibly from a user-created group of apps, depending on how their mobile device is designed and configured.

Users may obtain applications from applications stores, such as The Apple Store, which currently houses more than 300,000 applications, and Android Market which holds more than 150,000 applications, or from other sources. The huge number of available applications makes it difficult for users to find those applications which arc matched to their needs. Users may follow recommendations from friends or reviewers to discover apps of interest. There are also apps that may be used for searching on application stores, for example, AppBrain and Chomp.

### BRIEF SUMMARY

According to a first aspect of the invention, a mobile device comprises: a content selector for selecting recommended mobile applications from those available to the device based on at least one of: context information; user defined preference; and context events. A first user interface area is included for displaying recommended applications selected by the content selector. A second user interface area is included for displaying applications selected by the user for a given context. The first user interface area may be dynamically updated according to user activity and/or on user request. In one embodiment, the content selector selects mobile applications from mobile applications stored on the device and from mobile applications stored remotely.

The mobile device may be a smartphone, tablet, or other portable device capable of running apps.

By using an embodiment in accordance with the invention, the most relevant apps a user may need in a given situation may be gathered onto one screen. The list of applications offered to the user is selected using contextual information, such as time, location, user activity and the like.Thus, based on an intelligent user interface, user management of the apps that are already installed may be facilitated and it also may enable dynamic discovery of new apps stored remotely that are of interest to the user.

The user interface configuration in one embodiment has different areas in each of which a set of applications, represented by icons, is displayed according to certain rules. In one embodiment, user events may be captured and processed from a touch screen, such as for example dragging and dropping applications between different areas and for triggering specific actions such as automatically downloading a new app, or displaying recommended apps.

The behavior of a user interface area and its content may depend on the user contextual information processed in real time by the device. In one embodiment, the user contextual information may be usefully modeled in three dimensions: location/motion, time and a set of keywords.

According to a second aspect of the invention, a method of managing mobile applications for a mobile device comprises selecting recommended mobile applications from those available to the device based on at least one of: context information; user defined preference; and context events. Displaying selected recommended applications in a first user interface area and displaying for applications selected by the user for a given context in a second user interface area.

According to a third aspect of the invention, a data storage medium stores a machine-executable program for performing a method of managing mobile applications for a mobile device. The method comprises selecting recommended mobile applications from those available to the device based on at least one of: context information; user defined preference; and context events. The method further includes displaying selected recommended applications in a first user interface area; and displaying for applications selected by the user for a given context in a second user interface area.

### BRIEF DESCRIPTION OF THE DRAWINGS

Some embodiments of the present invention will now be described by way of example only, and with reference to the accompanying drawings, in which:
Figure 1 schematically illustrates aspects of a mobile device in accordance with the invention;
Figure 2 schematically illustrates a first display configuration for the device of Figure 1;
Figure 3 schematically illustrates a second display configuration for the device of Figure 1;
Figure 4 schematically illustrates a third display configuration for the device of Figure 1;
Figure 5 schematically illustrates a fourth display configuration for the device of Figure 1.

### DETAILED DESCRIPTION

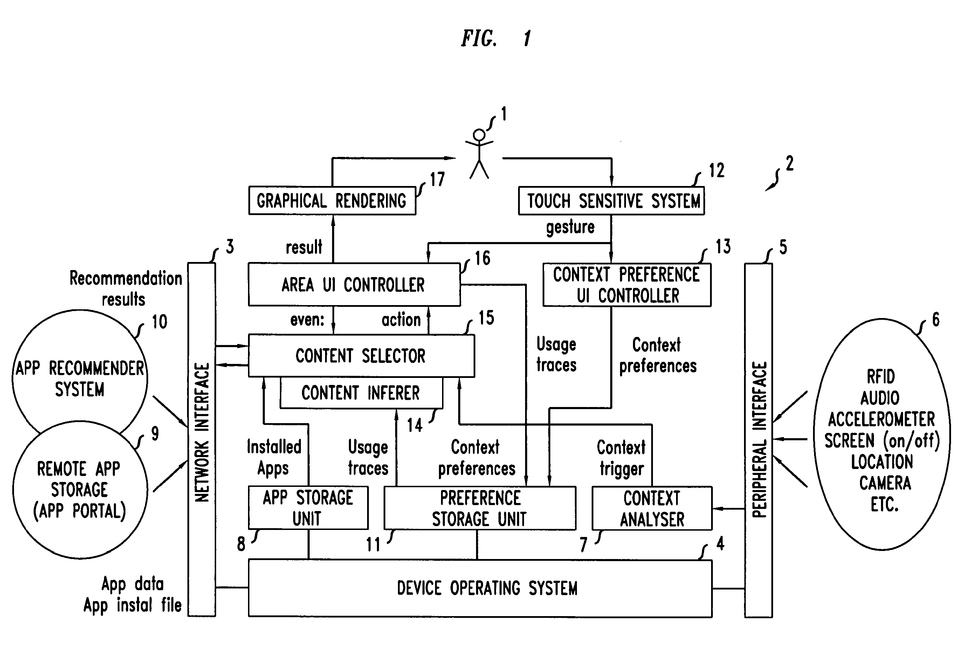

The following description is concerned with the management of apps for use on a mobile device. Other aspects of the device, such as its wireless connectivity capabilities, are not addressed. With reference to Figure 1, a user 1 has a mobile device 2 which is able to access a cellular wireless telecommunications network via a network interface 3. The operating system of the device 2 is capable of running apps, which may be pre-installed or downloaded via the network from a software distributor, for example. Apps may also be obtained via other mechanisms, for example, by connecting a memory drive to the mobile device 2 to allow apps to be retrieved from the memory drive.

The mobile device 2 also includes a device operating system 4 and a peripheral interface 5.

The peripheral interface 5 is connected to receive input from sensors and other components 6 which may be integrated with the device or attached to it. The peripheral interface 5 may receive data from, for example, an RFID reader, a location sensor, such as a GPS device, an accelerometer, audio input, device display screen on/off status, camera image data, battery status, time and so on.

The peripheral interface 5 is connected to send data it receives to a context analyzer 7. The context analyzer 7 analyzes the data to maintain updated context information for the mobile device 2. The context analyzer 7 also detects context change events. The context information may be information about the environment of the mobile device, how the mobile device is being operated by the user and other data that may be useful in managing or selecting apps. The context analyzer 7 communicates context information and context change events to other components of the mobile device 2.

The mobile device includes an app storage component 8 which contains a details of the applications that are installed on the mobile device 2 and may also include details of apps that have been previously installed and subsequently uninstalled.

The mobile device 2 has access to one or more remote app store or stores 9 via an app portal and the network interface 3. The device 2 also receives recommendations from a remote recommendation system 10 for apps that might be of interest to the user. The recommendation system 10 may be dedicated to apps available via the portal or portals 9 or may be a separate system 10 that provides recommendations for apps from other sources also. Thus, apps are potentially available to the user from a remote store and also from those already installed on the device 2.

A preference storage component 11 stores user operational preferences, such as which actions are enabled or disabled by the user. The user preferences are set via a touch sensitive system 12 which captures gestures, for example, slide, touch, long touch, and so on, made by the user on a touch screen. A touch screen is particularly convenient to use, but other types of interface may be used to capture user input in other embodiments.

A context preference UI controller 13 allows the user to explicitly define a context through a set of menus. For instance, a context could be defined with three dimensions: time or timeframe; location or address; and keywords used for specifying more precisely what the user is looking for. The context is then stored in the preference storage component 11 for later use. The preference storage component 11 also monitors how the user interacts with the mobile device 2, such as on which icon the user clicks, which icons are usually grouped together by the user in a Personal Application Area (PAA) and so on, and delivers this usage trace information to a content inferring unit 14, together with operational preferences information.

The content inferring unit 14 constructs rules for selecting applications based on the usage traces and the user preferences. For example, in a given context, the content inferring unit 14 may infer that the user always uses a given application in that context, or in another scenario, that the user usually uses a particular application following use of another specific application.

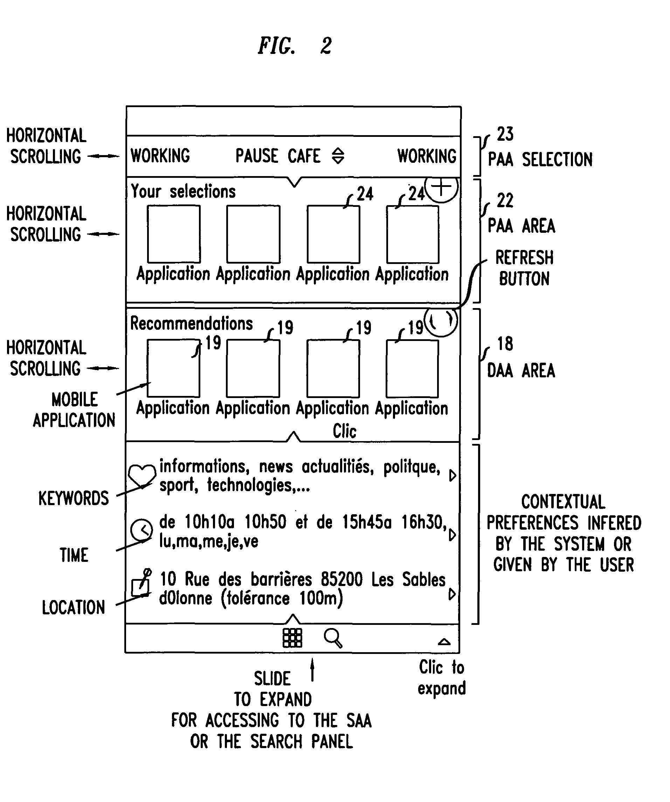

A content selector 15 receives various inputs and uses the information to select from those apps available, either remotely or stored on the device, those that are to be displayed to the user at the user interface. The apps are represented by icons in specified areas of the device user interface, shown in Figures 2 to 5 and further described below. The selection of apps for each particular user interface area is made by the content selector 15 based on: rules inferred by the content inferring unit 14; on actions triggered by the user; on context preferences; and on the detected context. The output of the content selector 15 is a set of actions for processing by area user interface (UI) controller 16 which manages what is displayed to the user in different areas via graphical rendering unit 17. The area UI controller 16 also transforms gesture messages from the touch sensitive system 12 into events which are input to the content selector 15 The area UI controller 16 also monitors the interactions between the user and the application icons, for example, as the user moves the icons around the user interface to re-order them or to launch an app, or some other action.

The user interface of the mobile device 2 has four areas, shown in Figures 2 to 5 which show different configurations of the user interface display for the mobile device 2. These areas can be manipulated by the user so as to expand or contract them. For example, the user may select only one or two areas to displayed fully, with the other three or two minimized, or whatever other combination the user wishes, for example, expanding all four areas. The choice will depend on the user's current requirements and the ease of reading the displays on the particular mobile device.

A first area is a dynamic application area or DAA, for example, as shown at 18 in Figure 2. This is an area where app recommendations are displayed, being shown as icons 19. The recommendations are for those apps that are available from the remote store 9 and from those already installed in the device, and chosen by the content selector 15. The selected recommended apps are updated dynamically according to the user activity or on user request. In this embodiment, the size of the DAA 18 is limited, for example, to eight slots. Other embodiments may have more slots or they may be a variable number and set by the user.

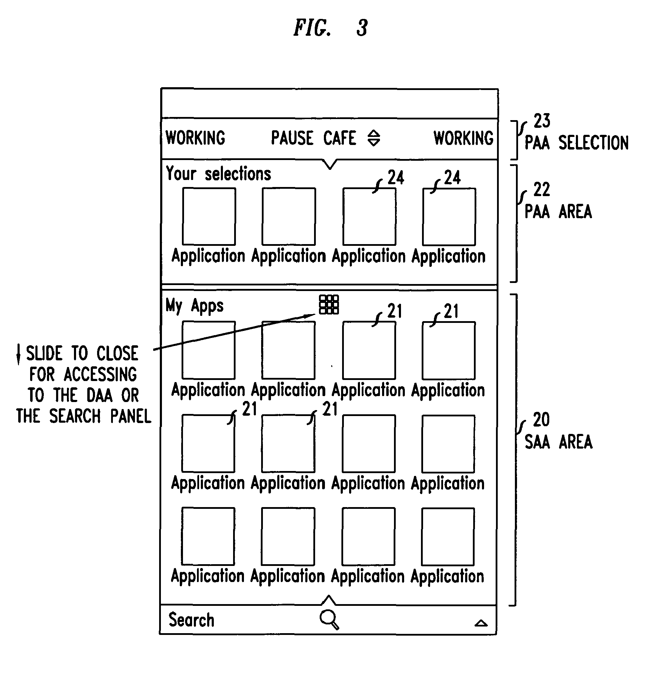

A second area is the static application area or SAA 20, shown in Figure 3. The SAA 20 contains icons 21 of all the apps installed on the mobile device 2. The user may manage installed apps from this area, for example, to uninstall an app, launch an app, adding to a personal application area or PAA and so on.

The third area is the personal application area or PAA 22, shown in Figures 2 and 3. The PAA 22 is similar to the DAA 18 in that shows a selection of apps that are useful in a particular context. But unlike the DAA 18, the user configures the apps that should appear in defined contexts in the PAA 22. A context may be selected by the user scrolling in the PAA selection area 23. The PAA 22 is thus a selection of apps 24 found either on the mobile device 2, or through a search, or through a recommendation in the DAA 18 for a particular context. The most appropriate PAA 22, if it matches the user selected context, may be dynamically selected by the system and then displayed.

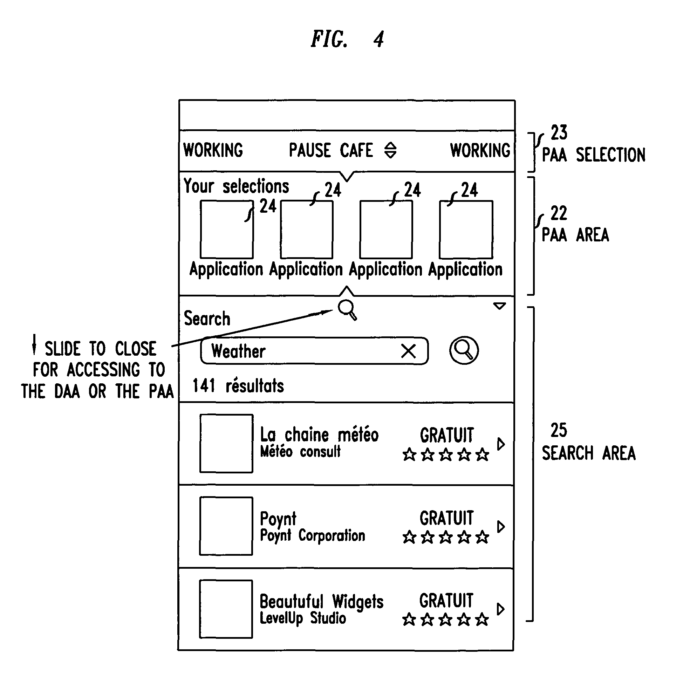

The fourth area is a search area 25, as shown in Figure 4. The search area 25 displays search results concerning applications that are stored remotely, for example, on an app store for instance. The search is made by the user based on keywords or keyphrases. The results may be filtered out based on user preferences.

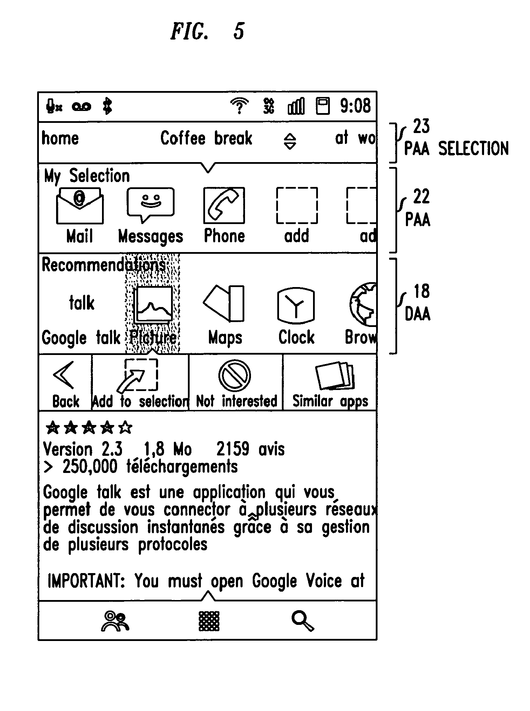

Figure 5 shows the user interface of the mobile device in which the user has expanded the PAA 22 and DAA 18.

The table below gives examples of events and actions and is non-exhaustive. In other embodiments different combinations of events and actions may be chosen.

**Table 1 - events and actions**

| Events | Actions |
|---|---|
| drag & drop app icon from the SAA or the DAA or the search area into the PAA | add the application to the PAA + generate a usage |
| the context changes (trigger) | update and refresh the display of the DAA (recommendation) and of the PAA |
| user contextual preferences change | update and refresh the display of the DAA and of the PAA |
| long touch on an app in the PAA | the application is removed from the PAA |
| the SAA is displayed | sort the applications according to inferred rules and user contextual preferences |
| Touch on an application in the DAA | The description of the application is displayed |
| Touch on an application in the PAA | If the application is installed the app is launched If the application is not installed let the user install the app through the remote application store UI If the application is a web link launch the web link in the default browser |
| Touch on the "similar apps" button | update and refresh the display of the DAA (specific recommendation containing similar apps) |

The functions of the various elements shown in the figures, including any functional blocks labelled as "units", may be provided through the use of dedicated hardware as well as hardware capable of executing software in association with appropriate software. When provided by a processor, the functions may be provided by a single dedicated processor, by a single shared processor, or by a plurality of individual processors, some of which maybe shared. Moreover, explicit use of the term "unit" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A mobile device comprising:
a content selector for selecting recommended mobile applications from those available to the device based on at least one of: context information; user defined preference; and context events;
a first user interface area for displaying recommended applications selected by the content selector; and
a second user interface area for displaying applications selected by the user for a given context.

2. The device as claimed in claim 1 wherein the first user interface area is dynamically updated according to user activity and/or on user request.

3. The device as claimed in claim 1 or 2 wherein the content selector selects mobile applications from mobile applications stored on the device and from mobile applications stored remotely.

4. The device as claimed in claim 1, 2 or 3 and including a third user interface area for conducting searches of mobile applications stored remotely.

5. The device as claimed in claim 1, 2, 3 or 4 and including a fourth user interface area for displaying mobile applications stored on the device and means for managing the stored applications.

6. The device as claimed in any preceding claim and including a peripheral interface for receiving data from sensors associated with the device to provide data regarding the device context; a context analyzer for analyzing data from the peripheral interface to obtain context information and transmit the context information to the content selector for use in making the selection.

7. The device as claimed in any preceding claim and including a content inferring unit for constructing rules for selecting applications based on user preferences and usage traces.

8. The device as claimed in claim 7 wherein the content selector makes its selection for selecting recommended mobile applications from those available to the device using rules constructed by the content inferring unit; on actions triggered by the user; on context preferences; and on the detected context.

9. The device as claimed in any preceding claim wherein the user interface enables the user to move a mobile application from one user interface area to another interface area.

10. The device as claimed in any preceding claim wherein the user interface includes a touch screen.

11. A method of managing mobile applications for a mobile device comprising:
selecting recommended mobile applications from those available to the device based on at least one of: context information; user defined preference; and context events;
displaying selected recommended applications in a first user interface area; and
displaying for applications selected by the user for a given context in a second user interface area.

12. The method as claimed in claim 11 and including dynamically updating the first user interface area according to user activity and/or on user request.

13. The method as claimed in claim 11 or 12 and including selecting recommended mobile applications from mobile applications stored on the device and from mobile applications stored remotely.

14. A data storage medium storing a machine-executable program for performing a method of managing mobile applications for a mobile device comprising:
selecting recommended mobile applications from those available to the device based on at least one of: context information; user defined preference; and context events;
displaying selected recommended applications in a first user interface area; and
displaying for applications selected by the user for a given context in a second user interface area.
